# EUROPEAN PATENT SPECIFICATION

(11) **EP 4 706 805 B1**
(45) Date of publication and mention of the grant of the patent: **30.09.2026**
(21) Application number: 25197656.9
(22) Date of filing: 22.08.2025
(51) Int. Cl.: B01D 53/94, B01J 23/58, B01J 23/63, B01J 35/00, B01J 35/57, B01J 37/02, F01N 3/10, F01N 3/28

(54) **EXHAUST GAS PURIFICATION CATALYST**
ABGASREINIGUNGSKATALYSATOR
CATALYSEUR DE PURIFICATION DE GAZ D'ÉCHAPPEMENT

(30) Priority: 06.09.2024 JP 2024154325
(43) Date of publication of application: 11.03.2026
(73) Proprietor: MAZDA MOTOR CORPORATION, Hiroshima 730-8670 (JP)
(72) Inventor: Kawabata, Hisaya, Hiroshima, 730-8670 (JP); Yamada, Hiroshi, Hiroshima, 730-8670 (JP); Misumi, Satoshi, Hiroshima, 730-8670 (JP); Murakami, Hiroshi, Hiroshima, 730-8670 (JP)
(74) Representative: Müller-Boré & Partner Patentanwälte PartG mbB

(56) References cited:
- WO-A1-2024/075420
- US-A1- 2019 291 083
- US-A1- 2022 176 352
- US-A1- 2022 234 030
- US-A1- 2023 381 748

## Description

### BACKGROUND

The present disclosure relates to an exhaust gas purification catalyst.

A catalyst for purifying harmful components such as hydrocarbons (HC), carbon monoxide (CO), and nitrogen oxides (NOx) in exhaust gas is arranged in an exhaust passage of an engine of a motor vehicle.

With the recent tightening of exhaust emission regulations, such catalysts are required to achieve both improved purification performance, particularly for cold purification at an engine start, and reduced cost.

One of the causes that reduces the purification performance of the catalyst is poisoning by catalyst poisons such as phosphorus (P) contained in an engine oil or the harmful components in the exhaust gas.

One solution to the poisoning is devising the arrangement of a catalyst material in a catalyst monolith to reduce the influence of the poisoning, thereby suppressing the reduction in purification performance of the catalyst (e.g., see International Publication No. WO 2018/016606 and Japanese Unexamined Patent Publication No. 2024-000368).

Specifically, International Publication No. WO 2018/016606 discloses an exhaust gas purification catalyst including a support, a first catalytic layer on the upstream side, a second catalytic layer on the downstream side, and a third catalytic layer. In this catalyst, the third catalytic layer has an upstream portion located on the first catalytic layer, a downstream portion located on the second catalytic layer, and an intermediate portion between the upstream and downstream portions located between the first and second catalytic layers. According to this configuration, a considerable amount of phosphorus compounds is deposited in the upstream and intermediate portions (space portion) of the third catalytic layer, reducing the amount of phosphorus compounds deposited in the downstream portion of the third catalytic layer. This reduces the influence on the activity of catalyst components and provides the catalyst as a whole with high purification capability.

Japanese Unexamined Patent Publication No. 2024-000368 discloses an exhaust gas purification catalyst having a base material and a catalyst coating layer on the base material. The catalyst coating layer has a first catalyst coating layer containing Pd and/or Pt as a catalytic metal and a second catalyst coating layer containing Rh as a catalytic metal. The first catalyst coating layer is formed from an upstream end of the base material, and the second catalyst coating layer contains three types of oxygen storage/release (OSC) materials having different specific surface areas. In a preferred aspect, the second catalyst coating layer includes an upstream coating layer formed from the upstream end of the base material and a downstream coating layer formed from a downstream end of the base material, and the first catalyst coating layer is arranged on the upstream coating layer. It is described that this configuration achieves both the catalyst performance and the OSC performance in an atmosphere with a rich air-fuel ratio (A/F), where the catalyst is likely to be poisoned by HC.

Documents US2019/291083A1 and US2022/234030A1 also disclose exhaust gas purification catalysts with improved resistance to P-poisoning.

### SUMMARY

For improved purification performance and reduced cost, it is effective to increase the ratio of noble metal mainly in a portion which is more likely to make contact with the exhaust gas, such as the upstream portion or surface layer of the catalyst. This can improve the efficiency of purification while suppressing the increase in amount of expensive noble metal used.

The exhaust gas purification catalyst often contains the oxygen storage/release material (OSC material) in addition to the noble metal catalyst. The OSC material stores oxygen in a lean atmosphere with high oxygen concentration in the exhaust gas, and releases active oxygen in a stoichiometric or rich atmosphere with low oxygen concentration in the exhaust gas. In particular, the action of the OSC material provides the stoichiometric atmosphere where a three-way catalyst can easily exhibit the exhaust gas purification performance. That is, HC (hydrocarbon), CO (carbon monoxide) and NOx (nitrogen oxide) are efficiently purified (the A/F window is widened) although the A/F (air-fuel) ratio of the exhaust gas varies somewhat from the theoretical A/F ratio. Examples of the OSC material include Ce-containing oxides that store oxygen in the exhaust gas and release the oxygen as active oxygen by a reversible reaction accompanied by a change in valence. The Ce-containing OSC material stores oxygen in the exhaust gas and releases the oxygen as active oxygen by the reversible progress of a reaction accompanied by a change in the valence of Ce.

However, the Ce-containing oxide tends to decrease its oxygen storage/release capacity when phosphorus (P) poisoning occurs and a compound of Ce and P is formed. It is known that the P poisoning easily occurs at a portion of the catalyst that is more likely to make contact with the exhaust gas, such as an upstream portion or a surface layer.

That is, although the noble metal ratio is increased in the portion that is more likely to make contact with the exhaust gas such as the upstream portion or the surface layer, the upstream portion may reduce the oxygen storage/release capacity due to the P poisoning of the OSC material, and improvement of the purification performance may be hindered.

Under these circumstances, the present disclosure challenges to provide an exhaust gas purification catalyst that effectively reduces P poisoning and achieves both improved purification performance and reduced cost.

To address the challenge, an aspect of an exhaust gas purification catalyst disclosed herein is directed to an exhaust gas purification catalyst arranged in an exhaust passage of an engine and purifies P-containing exhaust gas of the engine, the exhaust gas purification catalyst including: a support having an upstream end and a downstream end; and a catalytic layer formed on the support to purify the exhaust gas, wherein the catalytic layer includes: a first catalytic layer that is formed from the upstream end to a first position on an outermost surface of the catalytic layer; a second catalytic layer that is formed from the downstream end to a second position upstream of the first position and has an overlapping portion that overlaps with the first catalytic layer and is arranged closer to the support than the first catalytic layer; and a third catalytic layer arranged closer to the support than the first catalytic layer and the second catalytic layer, the first catalytic layer contains a first catalyst material including Rh supported on a Ce-free support material and Ba, but does not contain Ce, the second catalytic layer contains a second catalyst material including Rh supported on a support material containing a Ce-based oxygen storage/release material, a ratio C2/C1 is more than 1.0, where C1 represents a Rh concentration in the first catalyst material, and C2 represents a Rh concentration in the second catalyst material, the third catalytic layer includes a front portion that is formed from the upstream end to a third position and contains an upstream catalyst material including Pd supported on an upstream support material and a rear portion that is formed from the third position to the downstream end and contains a downstream catalyst material including Pd supported on a downstream support material, and a ratio D1/D2 is more than 1.0, where D1 represents a Pd concentration in the upstream catalyst material, and D2 represents a Pd concentration in the downstream catalyst material.

As described above, the exhaust gas purification catalyst often contains, as an oxygen storage/release material (OSC material), an Ce-containing OSC material (Ce-based OSC material), but the oxygen storage/release capacity of the Ce-based OSC material tends to decrease due to P poisoning.

In this configuration, the Ce-free Ba-containing first catalytic layer is arranged on the outermost surface of the upstream portion of the catalytic layer where the catalyst is most likely to make contact with the gas and is easily poisoned by P. This suppresses the contact between P which is a substance derived from the oil and Ce, and also captures P in the form of a Ba-OP compound, thereby suppressing diffusion of P into the second catalytic layer. In particular, the first catalytic layer covers the second catalytic layer in the overlapping portion, thereby effectively suppressing P poisoning of the second catalyst material.

The inventors of the present application have found that the influence of the P poisoning may be reduced by increasing the ratio of noble metal in the upstream portion and surface layer of the catalytic layer. Thus, in this aspect, in addition to the above aspect, the Rh concentration C1 in the first catalyst material contained in the first catalytic layer arranged at a portion which is more likely to make contact with the exhaust gas is higher than the Rh concentration C2 in the second catalyst material contained in the second catalytic layer (C1/C2 is more than 1.0). Moreover, the third catalytic layer is divided into the front portion and the rear portion, and the Pd concentration D1 in the front portion is higher than the Pd concentration D2 in the rear portion (D1/D2 is more than 1.0). This configuration can improve the catalyst performance while suppressing both the influence of the P poisoning and the increase in amount of noble metal used.

In this aspect, the third catalytic layer containing Pd is covered with the first catalytic layer and the second catalytic layer both containing Rh. The first catalytic layer and the second catalytic layer serve as barriers to avoid the thermal degradation of Pd and the P poisoning.

It is preferred that a length from the upstream end to the first position is from 55% to 100%, inclusive, of the total length of the support.

In this aspect, the purification performance for HC, CO, and NOx (in the present specification, these are also collectively referred to as "three components") can be improved while reducing the influence of the P poisoning.

It is preferred that a length from the downstream end to the second position is from 55% to 100%, inclusive, of the total length of the support.

In this aspect, the purification performance for the three components can be further improved while reducing the influence of the P poisoning.

It is preferred that a length of the overlapping portion is from 8% to 90%, inclusive, of the total length of the support.

In this aspect, the purification performance for the three components can be further improved while reducing the influence of the P poisoning.

It is preferred that the ratio D1/D2 is 2.0 or more.

This is advantageous in obtaining excellent purification performance for the three components.

It is preferred that the ratio C1/C2 is from 1.2 to 5.0 inclusive.

This configuration can effectively improve the catalyst performance while suppressing both the influence of the P poisoning and the increase in amount of noble metal used.

It is preferred that the amount of Ba supported in the first catalytic layer is from 5 g/support to 20 g/support inclusive.

When the first catalytic layer supports the above-described amount of Ba, the diffusion of P into the second catalytic layer can be effectively suppressed.

It is preferred that at least one of the upstream support material or the downstream support material is at least one selected from the group consisting of activated alumina, a Ce-containing Zr-based composite oxide, and a Ce-free Zr-based composite oxide.

Activated alumina has high heat resistance and is cost-effective, contributing to long-term improvement in catalyst performance and cost reduction. The activated alumina is excellent in heat resistance, thereby improving the heat resistance of the second catalyst material. The Ce-containing Zr-based composite oxide widens the A/F window due to its oxygen storage/release capacity, contributing to the improvement in the catalyst performance. The Ce-free Zr-based composite oxide releases active oxygen through the oxygen exchange reaction, contributing to the improvement in the catalyst performance. Supporting Pd on these support materials particularly improves the purification performance for HC and CO.

It is preferred that the Ce-based oxygen storage/release material is a Ce-containing Zr-based composite oxide.

The Ce-containing Zr-based composite oxide has high oxygen storage/release capacity. When the second catalytic layer contains the Ce-containing Zr-based composite oxide, the A/F window is widened, and the catalyst performance can be improved.

It is preferred that the Ce-free support material is a Ce-free Zr-based composite oxide.

The Ce-free Zr-based composite oxide does not contain Ce, and is less susceptible to the P poisoning. The Rh-supporting Ce-free Zr-based composite oxide can maintain Rh in an appropriately oxidized state or reduced state even immediately after the exhaust gas atmosphere is switched, and can effectively purify NOx. The Rh-supporting Ce-free Zr-based composite oxide has high steam reforming (SR) activity, improving the capability of the first catalytic layer to generate reducing gases such as CO and H₂. Further, the first catalyst material having a higher Rh concentration than the second catalyst material allows the first catalytic layer to exhibit the SR activity at a lower temperature than the second catalytic layer. The support material of the second catalytic layer is likely to be reduced by the generated reducing gas. That is, Ce contained in the support material is likely to be Ce³⁺, and is less likely to be Ce²⁺ which is a combined state with PO₄²⁻. Thus, Ba that captures P and the high steam reforming activity of the first catalytic layer more effectively reduces the formation of CePO₄ in the second catalytic layer.

As described above, in the present disclosure, the Ce-free Ba-containing first catalytic layer is arranged on the outermost surface of the upstream portion of the catalytic layer which is most likely to make contact with the gas. This suppresses the contact between P which is a substance derived from the oil and Ce, and also captures P in the form of a Ba-O-P compound, thereby suppressing diffusion of P into the second catalytic layer. In particular, the first catalytic layer covers the second catalytic layer in the overlapping portion, thereby effectively suppressing P poisoning of the second catalyst material. With this configuration, the Rh concentration C1 in the first catalyst material contained in the first catalytic layer arranged at a portion which is more likely to make contact with the exhaust gas is higher than the Rh concentration C2 in the second catalyst material contained in the second catalytic layer. Moreover, the third catalytic layer is divided into the front portion and the rear portion, and the Pd concentration D1 in the front portion is higher than the Pd concentration D2 in the rear portion. This configuration can improve the catalyst performance while supressing both the influence of the P poisoning and the increase in amount of noble metal used. The third catalytic layer containing Pd is covered with the first catalytic layer and the second catalytic layer both containing Rh, suppressing thermal degradation of Pd and the P poisoning.

### BRIEF DESCRIPTION OF DRAWINGS

[FIG. 1] FIG. 1 is a perspective view and a partial cross-sectional view of an example of an exhaust gas purification catalyst according to the present disclosure.
[FIG. 2] FIG. 2 is a schematic cross-sectional view of a catalytic layer.
[FIG. 3] FIG. 3 is a graph showing the relationship between the amount of catalytic metal supported and light-off temperature T50 of HC.
[FIG. 4] FIG. 4 is a table showing the structures of catalytic layers of catalyst samples used in Experiment 1.
[FIG. 5] FIG. 5 is a table showing catalyst models and the structures of catalytic layers of catalyst samples used in Experiment 2.
[FIG. 6] FIG. 6 is a graph showing CO emissions calculated by CAE analysis using catalyst models of Experimental Examples 2-1 to 2-16.
[FIG. 7] FIG. 7 is a graph showing NOx emissions calculated by CAE analysis using the catalyst models of Experimental Examples 2-1 to 2-16.
[FIG. 8] FIG. 8 is a graph showing HC emissions calculated by CAE analysis using the catalyst models of Experimental Examples 2-1 to 2-16.
[FIG. 9] FIG. 9 is a graph showing the total emissions of three components calculated by CAE analysis using the catalyst models of Experimental Examples 2-1 to 2-16.
[FIG. 10] FIG. 10 is a graph showing the relationship between the total emissions of the three components calculated by CAE analysis using the catalyst models of Experimental Examples 2-11, 2-17, and 2-11b to 2-11f and the Pd concentration ratio D1/D2.

### DETAILED DESCRIPTION

Embodiments of the present disclosure will be described in detail below with reference to the drawings. The following embodiments are merely exemplary ones in nature, and are not intended to limit the scope, applications, or use of the present disclosure.

### <Configuration of Exhaust Gas Purification Catalyst>

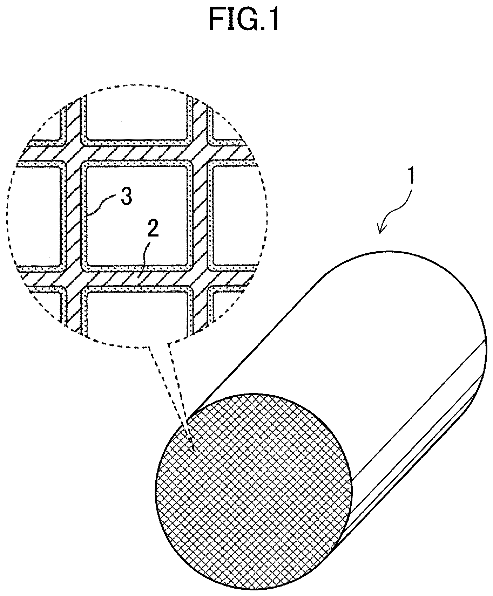

An exhaust gas purification catalyst 1 according to an embodiment of the present disclosure shown in FIG. 1 is arranged in an exhaust passage of an engine of a motor vehicle to purify HC, CO, and NOx in P-containing exhaust gas of the engine.

The exhaust gas purification catalyst 1 includes a support 2 (support) with a honeycomb structure having an upstream end 2A and a downstream end 2B and a catalytic layer 3 formed on cell walls (exhaust gas passage walls) in the support 2 to purify the exhaust gas.

The support 2 shown in FIG. 1 has the cells with a rectangular cross-sectional shape, but the cells may have any cross-sectional shape. The support 2 may have, for example, a hexagonal honeycomb structure having the cells with a hexagonal cross-sectional shape. The material of the support 2 is not particularly limited, and may be any material used for general exhaust gas purification catalysts, for example, inorganic microporous materials such as cordierite, SiC, Si₃N₄, SiALON, and AlTiO₃. The volume of the support 2 is not particularly limited, and is appropriately determined according to the specifications of the motor vehicle.

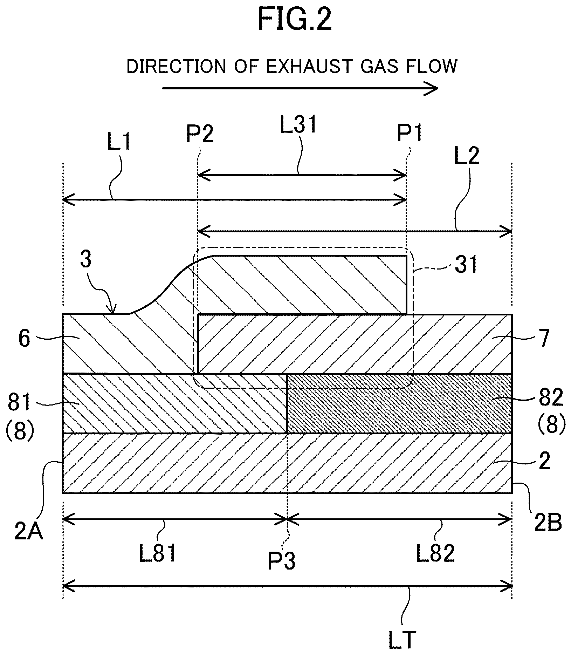

As illustrated in FIG. 2, the catalytic layer 3 has a three-layer structure including a first catalytic layer 6, a second catalytic layer 7, and a third catalytic layer 8.

The first catalytic layer 6 is formed from the upstream end 2A to a first position P1 on the outermost surface of the catalytic layer 3. The first catalytic layer 6 contains Rh as a catalytic metal.

The second catalytic layer 7 is formed from the downstream end 2B to a second position P2 upstream of the first position P1, and has an overlapping portion 31 that overlaps with the first catalytic layer 6 and is arranged closer to the support 2 than the first catalytic layer 6. In other words, at least an upstream portion of the second catalytic layer 7 is covered with the first catalytic layer 6. The second catalytic layer 7 contains Rh as a catalytic metal.

The third catalytic layer 8 is formed on the surface of each cell wall of the support 2 over the entire length of the support 2, and is arranged closer to the support 2 than the first catalytic layer 6 and the second catalytic layer 7. In other words, the surface of the third catalytic layer 8 facing the exhaust gas passage is entirely covered with the first catalytic layer 6 and the second catalytic layer 7. The third catalytic layer 8 has a front portion 81 formed from the upstream end 2A to a third position P3 and a rear portion 82 formed from the third position P3 to the downstream end 2B. The third catalytic layer 8 contains Pd as a catalytic metal.

The catalytic layer 3 of the present example has the three-layer structure, but is not limited to have the three-layer structure as long as the catalytic layer 3 includes the first catalytic layer 6, the second catalytic layer 7, and the third catalytic layer 8, and may have a laminated structure of four or more layers. That is, other layers may be formed between the first, second, and third catalytic layers and between the third catalytic layer 8 and the cell wall surface of the support 2. The catalytic layer 3 may contain, as a catalytic metal, other noble metal such as Pt or other transition metal in addition to Rh and Pd.

In the present specification, the amount of material supported is expressed in "g/support" in principle. The unit "g/support" means the amount of the material supported per support with a volume of 1 L. Specifically, when a material indicated with an amount y "g/support" is supported on a support with a volume x "L," the amount of the material supported is x × y "g." More specifically, for example, when a material indicated with 20 "g/support" is supported on a support with a volume of 2 "L," 40 "g" of the material is supported on the support.

In this specification, when a material is supported over the entire length of the support, the amount of the material supported may be expressed in "g/L." In this case, the unit "g/L" means the amount supported per liter of the support.

### [First Catalytic Layer]

The first catalytic layer 6 contains a first catalyst material including Rh supported on a Ce-free support material and Ba. The first catalytic layer 6 does not contain Ce.

As described above, a Ce-containing OSC material widens the A/F window due to the oxygen storage/release capacity accompanying the change in the valence of Ce, contributing to the improvement of the catalyst performance. However, the oxygen storage/release capacity tends to decrease when P poisoning occurs and a compound of Ce and P is formed. With this configuration, the Ce-free Ba-containing first catalytic layer 6 is arranged on the uppermost surface of the upstream portion of the catalytic layer 3, which is most likely to make contact with the gas and is susceptible to the P poisoning, to cover the Ce-containing second catalytic layer 7. This physically suppresses direct contact between P which is a substance derived from the oil and Ce contained in the second catalytic layer 7, and captures P in the form of a Ba-OP compound in the first catalytic layer 6, reducing diffusion of P into the second catalytic layer 7.

Examples of the Ce-free support material include Ce-free metal oxides, and specific examples thereof include Ce-free Zr-based composite oxides and activated alumina. One of these support materials may be used alone, or two or more of them may be used in combination.

The support material is preferably the Ce-free Zr-based composite oxide.

The Ce-free Zr-based composite oxide does not contain Ce, and thus has the advantage of being less susceptible to the P poisoning.

In addition, the Ce-free Zr-based composite oxide, which has high ion conductivity, takes oxygen inside from the surroundings through an oxygen exchange reaction and releases active oxygen with no change in the valence of metal ions, allowing the release of oxygen in a lower rate as compared with the Ce-based OSC material. Thus, the Rh-supporting Ce-free Zr-based composite oxide can maintain Rh in an appropriately (not excessively) oxidized state or reduced state even immediately after the exhaust gas atmosphere is switched from lean to rich, and can effectively purify NOx.

The Rh-supporting Ce-free Zr-based composite oxide exhibits high steam reforming (SR) activity. This improves the capability of the first catalytic layer 6 to generate reducing gas such as CO and H₂. As will be described later, the Rh concentration C1 in the first catalyst material is higher than the Rh concentration C2 in the second catalyst material. This allows the first catalytic layer 6 to exhibit the SR activity at a lower temperature than the second catalytic layer 7. The support material of the second catalytic layer 7 is easily reduced due to the generated reducing gas. That is, Ce contained in the support material is likely to be Ce³⁺, and is less likely to be Ce²⁺ which is a combined state with PO₄²⁻. Thus, in the first catalytic layer 6, Ba that captures P and the high steam reforming activity of the Rh-supporting Ce-free Zr-based composite oxide effectively reduce the formation of CePO₄ in the second catalytic layer 7.

As the Ce-free Zr-based composite oxide, a Ce-free Zr-based composite oxide containing La and Y in addition to Zr can be used.

The amount of the first catalyst material supported on the support 2 is preferably from 20 g/support to 150 g/support inclusive from the viewpoint of ensuring sufficient catalyst performance.

A Ba source contained in the first catalytic layer 6 is not particularly limited, and a generally known substance can be used. Specific examples of the Ba source include BaSO₄ and Ba₃P₄O₁₃. The first catalytic layer 6 may contain the Ba either in the form of the substance itself serving as the Ba source, or in the form of being supported on the support material such as activated alumina.

From the viewpoint of effectively suppressing the diffusion of P into the second catalytic layer 7, the amount of Ba supported on the first catalytic layer 6 is preferably from 5 g/support to 20 g/support inclusive, and more preferably from 10 g/support to 15 g/support inclusive.

The first catalytic layer 6 may contain a binder as an optional component. The binder is not particularly limited, and may be a binder generally used for the exhaust gas purification catalysts. Specifically, for example, a Y-stabilized zirconia binder or a Rh-doped CeZr-based composite oxide can be used as the binder. When the Rh-doped CeZr-based composite oxide is used as the binder, the Rh-doped CeZr-based composite oxide is preferably reduced for use. The reduction increases the amount of metal Rh on the surface of the binder and brings the metal Rh and the exhaust gas into contact more often, further improving the exhaust gas purification performance of the first catalytic layer 6. When the Rh-doped CeZr-based composite oxide is used as the binder, Rh contained in the binder is not included in the calculation of the Rh concentration C1. The first catalytic layer 6 may contain any amount of binder as long as the amount is sufficient for layer formation (e.g., 5 mass% to 20 mass% of the first catalytic layer 6).

The first catalytic layer 6 may optionally contain other components. Specifically, for example, a Ce-free Zr-based composite oxide containing no catalytic metal and a promoter such as activated alumina may be optionally contained as the other components. The first catalytic layer 6 may contain any amount of other components, and the amount can be appropriately determined according to the purification performance, for example, 30 g/support or less.

### [Second Catalytic Layer]

The second catalytic layer 7 contains a second catalyst material including Rh supported on a support material containing a Ce-based oxygen storage/release material.

Specific examples of the Ce-based oxygen storage/release material include, but not limited to, ceria, a composite oxide of Ce and Zr, and a Ce-containing Zr-based composite oxide which is a composite oxide of Ce, Zr, and other elements.

The Ce-containing OSC material is preferably a Ce-containing Zr-based composite oxide. The Ce-containing Zr-based composite oxide has high oxygen storage/release capacity. The Ce-containing Zr-based composite oxide contained in the second catalytic layer 7 widens the A/F window, improving the catalyst performance. From the viewpoint of improvement in heat resistance and increase in oxygen storage/release amount due to increased crystal distortion, the Ce-containing Zr-based composite oxide is preferably a composite oxide of Ce, Zr, and a rare earth element (e.g., Nd, La, Y, or Pr). The Ce-containing Zr-based composite oxide may be a single composite oxide or a mixture of two or more composite oxides. The mixture of two or more composite oxides may be a mixture of composite oxides of different elements or a mixture of composite oxides of the same elements mixed in different ratios.

The support material contained in the second catalyst material may contain other support material than the Ce-based oxygen storage/release material. Examples of the support material other than the Ce-based oxygen storage/release material include, but are not limited to, Ce-free Zr-based composite oxides and activated alumina. As the Ce-free Zr-based composite oxide, a composite oxide having the same composition as the first catalyst material described above can be used.

Preferably, the Ce-containing Zr-based composite oxide and the Ce-free Zr-based composite oxide are used in combination as the support material.

As described above, the Ce-containing Zr-based composite oxide is based on a reaction accompanied by the change in the valence of Ce, and thus, releases oxygen at high rate and effectively absorbs the fluctuation of A/F. However, for example, the Ce-containing Zr-based composite oxide rapidly releases oxygen immediately after the exhaust gas atmosphere is switched from lean to rich. Thus, most of Rh supported as the catalytic metal is likely to be oxidized and cannot effectively purify NOx which starts to generate in the exhaust gas immediately after the atmosphere is switched.

In this regard, the Ce-free Zr-based composite oxide releases oxygen at a lower rate than the Ce-containing Zr-based composite oxide as described above, and can effectively purify NOx even immediately after the exhaust gas atmosphere is switched.

Thus, combined use of the Ce-containing Zr-based composite oxide and the Ce-free Zr-based composite oxide as the support material is advantageous particularly for improving the purification performance for NOx.

The second catalytic layer 7 may also contain Ba as the first catalytic layer 6 does. Although P reaches the second catalytic layer 7, Ba can capture P, reducing the influence of the P poisoning. As a source of Ba contained in the second catalytic layer 7, a substance similar to that contained in the first catalytic layer 6 can be used, and the substance may be the same as or different from the Ba source of the first catalytic layer 6. The second catalytic layer 7 may support any amount of Ba, for example, 20 g/support or less, preferably from 1 g/support to 10 g/support inclusive.

The second catalytic layer 7 may also contain optional components such as a binder and other components as the first catalytic layer 6 does. The optional components may contain the same elements as those contained in the first catalytic layer 6 or different elements. Specific examples of the optional components include those exemplified for the first catalytic layer 6. When the Rh-doped CeZr-based composite oxide is used as the binder, Rh contained in the binder is not included in the calculation of the Rh concentration C2.

The amount of the second catalyst material supported on the support 2 is preferably from 20 g/support to 150 g/support inclusive from the viewpoint of ensuring sufficient catalyst performance.

The Rh content in the catalytic layer 3, that is, the total amount of Rh supported on the first catalytic layer 6 and the second catalytic layer 7, is preferably from 1.0 g/support to 2.0 g/support from the viewpoint of ensuring the excellent catalyst performance of the catalytic layer 3.

Although Rh supported on the support 2 may be entirely contained in the first catalytic layer 6 and the second catalytic layer 7 or may be dispersed and supported on the other layers, Rh supported on the support 2 is preferably entirely contained in the first catalytic layer 6 and the second catalytic layer 7 from the viewpoint of improving the purification performance for NOx.

### [Rh Concentration and Rh Concentration Ratio of First and Second Catalyst Materials]

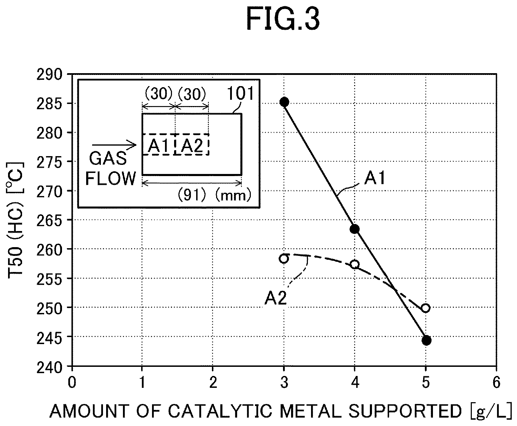

FIG. 3 shows light-off temperatures T50 of HC in core samples of exhaust gas purification catalysts containing Pd and Rh as catalytic metals supported in different amounts. The core samples were cut out from an upstream portion A1 (a portion with a length of 30 mm from a front end of an exhaust gas purification catalyst 101) and a middle portion A2 (a portion between a point of 30 mm and a point of 60 mm from the front end of the exhaust gas purification catalyst 101) of each catalyst after bench aging at a catalyst temperature of 930°C for an aging time of 300 hours. Each catalyst includes a Pd layer and a Rh layer shown below supported in this order on cell walls of a monolithic support (118.4 mm in diameter × 91 mm in length, 1 L in volume) in a Pd/Rh ratio of 4/1 (mass ratio). Each layer is a uniform monolayer coating.

### Pd Layer (Lower Layer):

Pd-supporting Al₂O₃, 45 g/L (amount of Al₂O₃ supported)

### Pd-supporting ZrCeNd composite oxide, 35 g/L (amount of ZrCeNd composite oxide supported)

ZrCeNd composite oxide, 10 g/L (amount of ZrCeNd composite oxide supported) Rh Layer (Upper Layer):
Rh-supporting ZrCeNd composite oxide, 90 g/L (amount of ZrCeNd composite oxide supported)
Rh-supporting ZrLaY composite oxide, 15 g/L (amount of ZrLaY composite oxide supported)

It is known that the upstream and outer portions of the exhaust gas purification catalyst 1 (portions facing the exhaust gas passage) are likely to be poisoned by P upon contact with the P-containing exhaust gas derived from the engine oil. That is, in the graph of the exhaust gas purification catalyst 1 shown in FIG. 3, the upstream portion A1 is more poisoned by P than the middle portion A2.

When the amount of the catalytic metal supported increases from 3 g/L to 5 g/L, T50 of the middle portion A2 decreases by about 8°C. On the other hand, when the amount of the catalytic metal supported increases from 3 g/L to 5 g/L, T50 of the upstream portion A1 decreases by about 40°C. That is, compared to the middle portion A2, the upstream portion A1 significantly improves the purification performance for HC with the increase in amount of the catalytic metal supported. This means that the influence of the P poisoning can be reduced by increasing the noble metal concentration in the upstream portion. From the results shown in FIG. 3, it can be considered that the influence of the P poisoning is reduced by increasing the noble metal concentration in the surface layer, which is more likely to make contact with the exhaust gas and is susceptible to the P poisoning as well as the upstream portion.

Thus, the catalytic layer 3 of the present disclosure is configured to set the Rh concentration C1 in the first catalytic layer 6 higher than the Rh concentration C2 in the second catalytic layer 7, that is, the Rh concentration ratio C1/C2 is more than 1.0, preferably from 1.2 to 5.0 inclusive. This configuration can improve the catalyst performance while suppressing both the influence of the P poisoning and the increase in amount of noble metal used.

The Rh concentration C1 in the first catalytic layer 6 is preferably from 0.1 mass% to 6.0 mass% inclusive, more preferably from 0.2 mass% to 4.0 mass% inclusive, and more preferably from 0.3 mass% to 1.0 mass% inclusive. Setting the Rh concentration C1 in the first catalytic layer 6 within the above range can effectively improve the efficiency of purification.

When the first catalyst material contains two or more support materials, the Rh contents of the support materials may be different from each other or may be the same. The Rh concentration C1 in the first catalyst material is the ratio of the mass of Rh to the total mass of Rh and all support materials contained in the first catalyst material, expressed as a percentage.

The Rh concentration C2 in the second catalyst material contained in the second catalytic layer 7 is preferably 1.0 mass% or less, more preferably from 0.05 mass% to 0.30 mass% inclusive, and more preferably from 0.10 mass% to 0.28 mass% inclusive. Setting the Rh concentration C2 in the second catalyst material within the above range can effectively improve the efficiency of purification.

When the second catalyst material contains two or more support materials, the Rh contents of the support materials may be different from each other or may be the same. The Rh concentration C2 in the second catalyst material is the ratio of the mass of Rh to the total mass of Rh and all support materials contained in the second catalyst material, expressed as a percentage.

### [Lengths of First and Second Catalytic Layers]

The lengths of the first catalytic layer 6 and the second catalytic layer 7 will be described with reference to FIG. 2.

The first catalytic layer 6 may be formed over the entire length of the support 2. In this case, the first position P1 is the downstream end 2B.

The second catalytic layer 7 may also be formed over the entire length of the support 2. In this case, the second position P2 is the upstream end 2A.

The length of the first catalytic layer 6, that is, a length L1 from the upstream end 2A to the first position P1, is preferably from 55% to 100% inclusive, preferably from 55% to 90% inclusive, and more preferably from 55% to 80% inclusive, of the total length LT of the support 2 from the viewpoint of further improving the purification performance for the three components and suppressing the influence of the P poisoning.

The length of the second catalytic layer 7, that is, a length L2 from the downstream end 2B to the second position P2, is from 55% to 100% inclusive, preferably from 60% to 100% inclusive, more preferably from 70% to 100% inclusive, and much more preferably from 80% to 100% inclusive, of the total length LT of the support 2 from the viewpoint of further improving the purification performance for the three components and reducing the influence of the P poisoning.

The overlapping portion 31 has a length L31 which is from 8% to 90% inclusive, preferably from 20% to 80% inclusive, of the total length LT of the support 2 from the viewpoint of further improving the purification performance for the three components and reducing the influence of the P poisoning.

For the improvement of the purification performance for the three components, a combination of the length L1 of the first catalytic layer 6 from 55% to 77% inclusive of the total length LT and the length L2 of the second catalytic layer 7 from 77% to 100% inclusive of the total length LT is particularly preferable.

### [Third Catalytic Layer]

The front portion 81 contains an upstream catalyst material including Pd supported on an upstream support material.

The rear portion 82 contains a downstream catalyst material including Pd supported on a downstream support material.

Although not intended to be limiting, particularly from the viewpoint of improving the purification performance for HC and CO, at least one of the upstream support material or the downstream support material is preferably at least one selected from the group consisting of activated alumina, a Ce-containing Zr-based composite oxide, and a Ce-free Zr-based composite oxide.

Activated alumina has high heat resistance and is cost-effective, contributing to long-term improvement in catalyst performance and cost reduction. Activated alumina is not particularly limited, and can be any of various types of activated alumina generally used for exhaust gas purification catalysts, such as La-stabilized alumina.

As described above, the Ce-containing Zr-based composite oxide widens the A/F window due to its oxygen storage/release capacity, contributing to the improvement of the catalyst performance. The Ce-containing Zr-based composite oxide is not particularly limited, and can be, for example, a Ce-containing Zr-based composite oxide having the same composition as the Ce-containing Zr-based composite oxide contained in the second catalytic layer 7.

As described above, the Ce-free Zr-based composite oxide releases active oxygen through the oxygen exchange reaction, contributing to the improvement of the catalyst performance. The Ce-free Zr-based composite oxide is not particularly limited, and can be, for example, a Ce-free Zr-based composite oxide having the same composition as the Ce-free Zr-based composite oxide contained in the first catalytic layer 6.

The upstream support material and the downstream support material may be support materials of the same or different types. Preferably, each of the upstream support material and the downstream support material is a mixture of activated alumina and the Ce-containing Zr-based composite oxide. This improves the catalyst performance and durability of the third catalytic layer 8.

The third catalytic layer 8 may contain optional components such as a binder and other components, as the first catalytic layer 6 and the second catalytic layer 7 do. The optional components may contain the same elements as those contained in the first catalytic layer 6 and the second catalytic layer 7 or different elements. Specific examples of the optional components include those exemplified for the first catalytic layer 6.

The amount of each of the upstream catalyst material and the downstream catalyst material supported on the support 2 is preferably from 20 g/support to 150 g/support, inclusive, from the viewpoint of ensuring excellent catalyst performance.

The Pd content in the catalytic layer 3, that is, the total amount of Pd supported on the third catalytic layer 8, is preferably from 1.0 g/support to 5.0 g/support, inclusive, from the viewpoint of ensuring excellent catalyst performance of the catalytic layer 3.

Although Pd supported on the support 2 may be entirely contained in the third catalytic layer 8 or may be dispersed and supported on the other layers, Pd supported on the support 2 is preferably entirely contained in the third catalytic layer 8 from the viewpoint of suppressing thermal degradation of Pd and the P poisoning.

In the present disclosure, the third catalytic layer 8 containing Pd is covered with the first catalytic layer 6 and the second catalytic layer 7 containing Rh. The first catalytic layer and the second catalytic layer serve as barriers to avoid the thermal degradation of Pd and the P poisoning.

### [Pd Concentration and Pd Concentration Ratio of Upstream and Downstream Catalyst Materials]

As described above, the results shown in FIG. 3 indicate that the influence of the P poisoning can be reduced by increasing the noble metal concentration in the upstream portion.

In the catalytic layer 3 of the present disclosure, the third catalytic layer 8 is divided into the front portion 81 and the rear portion 82, and the Pd concentration D1 in the upstream catalyst material in the front portion 81 is higher than the Pd concentration D2 in the downstream catalyst material in the rear portion 82. Specifically, the Pd concentration ratio D1/D2 is more than 1.0, preferably 2.0 or more, more preferably from 8.0 to 30 inclusive, and particularly preferably from 9.0 to 27 inclusive. This configuration can improve the catalyst performance while suppressing both the influence of the P poisoning and the increase in amount of noble metal used.

The Pd concentration D1 in the front portion 81 is preferably from 0.5 mass% to 10 mass% inclusive, more preferably from 1.0 mass% to 7.0 mass% inclusive, and much more preferably from 3.5 mass% to 6.5 mass% inclusive. Setting the Pd concentration D1 in the front portion 81 within the above range effectively improves the efficiency of purification.

When the upstream support material is made of two or more support materials, the Pd contents of the support materials may be different from each other or may be the same. The Pd concentration D1 in the upstream catalyst material is the ratio of the mass of Pd to the total mass of Pd and all support materials contained in the upstream catalyst material, expressed as a percentage.

The Pd concentration D2 in the rear portion 82 is preferably from 0.05 mass% to 3.0 mass% inclusive, more preferably from 0.1 mass% to 2.5 mass% inclusive, and much more preferably from 0.15 mass% to 0.6 mass% inclusive. Setting the Pd concentration D2 in the rear portion 82 within the above range effectively improves the efficiency of purification.

When the downstream support material is made of two or more support materials, the Pd contents of the support materials may be different from each other or may be the same. The Pd concentration D2 in the downstream catalyst material is the ratio of the mass of Pd to the total mass of Pd and all support materials contained in the downstream catalyst material, expressed as a percentage.

### [Lengths of Front Portion and Rear Portion]

As illustrated in FIG. 2, the length L81 of the front portion 81 and the length L82 of the rear portion 82 are not particularly limited as long as they satisfy L81 + L82 = LT.

Specifically, the length L81 of the front portion 81 is, for example, from 20% to 80% inclusive, preferably from 30% to 70% inclusive, more preferably from 40% to 60% inclusive, and particularly preferably 50%, of LT.

When the length L81 of the front portion 81 is 50% of LT, the length L81 is equal to the length L82 of the rear portion 82.

This configuration ensures the appropriate lengths of the front portion 81 and the rear portion 82, and advantageously improves the catalyst performance while suppressing both the influence of the P poisoning and the increase in amount of noble metal used.

### [Other Configurations]

Although not intended to be limiting, the catalyst materials and the promoters contained in the catalytic layers may be powders with sizes adjusted by a ball mill as necessary, for example, powders having a mean particle diameter D50 between 0.1 µm and 50 µm inclusive.

The binder may be, but not limited to, a powder with a size adjusted by a ball mill as necessary, for example, a powder having a mean particle diameter D50 between 0.01 µm and 0.2 µm inclusive. The binder preferably has a smaller mean particle diameter D50 than the catalyst materials and the promoters.

In this specification, the mean particle diameter D50 of each material is a 50% value in a volume-based particle size distribution measured by a laser diffraction particle size analyzer.

### <Method for Producing Exhaust Gas Purification Catalyst>

### [Preparation of Catalyst Material]

As the catalyst material, a commercially available product can be used.

The catalyst material containing the composite oxide described above can be prepared by a known method such as co-precipitation method or evaporation and drying method.

As an example of preparation by co-precipitation method and evaporation and drying method, preparation of a Rh-supporting CeZrNd composite oxide including Rh supported on a Nd-containing CeZr-based composite oxide will be described below. First, a nitrate solution obtained by mixing cerium nitrate hexahydrate, a zirconium oxynitrate solution, neodymium nitrate hexahydrate, and ion-exchange water is mixed with an 8-fold diluted solution of 28 mass% ammonia water and neutralized to obtain a co-precipitate. The solution containing the co-precipitate is centrifuged to remove the supernatant (dehydration), and ion-exchange water is further added and stirred (washing with water). This operation is repeated a required number of times. Thereafter, the co-precipitate is dried at 150°C in the air for a whole day and night, pulverized, and then fired at 500°C in the air for two hours. Thus, a CeZrNd composite oxide powder is obtained. Rh is supported on the CeZrNd composite oxide powder by evaporation and drying method using an aqueous rhodium nitrate solution. The Rh-supporting CeZrNd composite oxide can be obtained in this manner.

Catalyst materials containing other composite oxides can be prepared by the same method.

### [Preparation of Exhaust Gas Purification Catalyst]

The exhaust gas purification catalyst 1 can be prepared by, for example, the following method.

First, catalyst materials which are the materials of the front portion 81 and the rear portion 82 of the third catalytic layer 8 are each mixed with a binder and other components as needed and a solvent to prepare slurries. The slurry for the front portion 81 is poured onto the support 2 to coat a portion with the length L81 from the upstream end 2A to the third position P3. The slurry for the rear portion 82 is poured onto the support 2 to coat a portion with the length L82 from the downstream end 2B to the third position P3. Then, the obtained product is dried and fired (e.g., in the atmosphere at 450°C for two hours) to form the third catalytic layer 8. Next, the second catalyst material which is the material of the second catalytic layer 7 is mixed with a binder and other components as needed and a solvent to prepare slurry, which is poured onto the support 2 to coat a portion with the length L2 from the downstream end 2B to the second position P2. Then, the obtained product is dried and fired (e.g., in the atmosphere at 450°C for two hours) to form the second catalytic layer 7. The first catalyst material which is the material of the first catalytic layer 6 is mixed with a binder and other components as needed and a solvent to prepare slurry, which is poured onto the support 2 to coat a portion with the length L1 from the upstream end 2A to the first position P1. Then, the obtained product is dried and fired (e.g., in the atmosphere at 450°C for two hours) to form the first catalytic layer 6. The exhaust gas purification catalyst 1 is obtained in this manner.

### (Experimental Examples)

Experimental examples actually conducted will be described below.

### <Experiment 1>

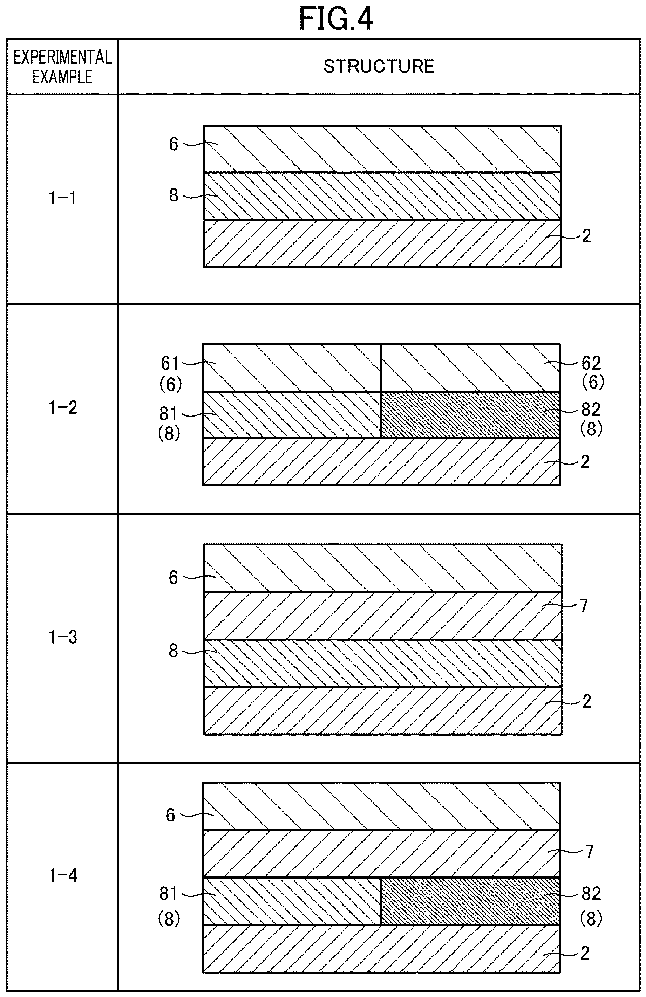

Catalyst samples of Experimental Examples 1-1 to 1-4 were prepared. FIG. 4 and Tables 1 and 2 show details of the first catalytic layer, the second catalytic layer, and the third catalytic layer of each catalyst sample.

**[Table 1]**

| Experimental Examples | First Catalytic Layer | | | | | | Second Catalytic Layer | | | | | | Rh Concentration Ratio C1/C2 |
|---|---|---|---|---|---|---|---|---|---|---|---|---|---|
| | Rh/ZrCeNd | | Rh/ZrLaY | | Rh Concentration C1 (mass%) | BaSO₄ | Rh/ZrCeNd | | Rh/ZrLaY | | Rh Concentration C2 (mass%) | BaSO₄ | |
| | Rh Concentration (mass%) | Amount of Support Material Supported (g/support) | Rh Concentration (mass%) | Amount of Support Material Supported (g/support) | | Amount of Ba Supported (g/support) | Rh Concentration (mass%) | Amount of Support Material Supported (g/support) | Rh Concentration (mass%) | Amount of Support Material Supported (g/support) | | Amount of Ba Supported (g/support) | |
| 1-1 | 0.3 | 90 | 0.15 | 15 | - | 10 | - | - | - | - | - | - | - |
| 1-2 | Front 0.36 | Front 45 | Front 0.46 | Front 7.5 | - | 5 | - | - | - | - | - | - | - |
| | Rear 0.11 | Rear 45 | Rear 0.14 | Rear 7.5 | - | 5 | | | | | | - | |
| 1-3 | - | - | 0.48 | 30 | 0.48 | 5 | 0.16 | 90 | 0.07 | 15 | 0.15 | 5 | 3.2 |
| 1-4 | - | - | 0.48 | 30 | 0.48 | 5 | 0.16 | 90 | 0.07 | 15 | 0.15 | 5 | 3.2 |

**[Table 2]**

| Experimental Examples | Third Catalytic Layer | | | | | | | | Results of Rig Test |
|---|---|---|---|---|---|---|---|---|---|
| | Pd/Al₂O₃ | | Pd/ZrCeNd | | ZrCeNd | Pd Concentration D1 (mass%) | Pd Concentration D2 (mass%) | Pd Concentration ratio D1/D2 | T50 (HC)(°C) after Bench Durability Process at 900°C |
| | Pd Concentration (mass%) | Amount of Support Material Supported (g/support) | Pd Concentration (mass%) | Amount of Support Material Supported (g/support) | Amount Supported (g/support) | | | | |
| 1-1 | 4 | 45 | 0.4 | 35 | 10 | - | - | - | 293 |
| 1-2 | Front 7.7 | Front 22.5 | Front 0.7 | Front 17.5 | Front 5 | 4.76 | - | 9.5 | 287 |
| | Rear 0.8 | Rear 22.5 | Rear 0.06 | Rear 17.5 | Rear 5 | - | 0.5 | | |
| 1-3 | 4 | 45 | 0.4 | 35 | 10 | - | - | - | 285 |
| 1-4 | Front 7.7 | Front 22.5 | Front 0.7 | Front 17.5 | Front 5 | 4.76 | - | 9.5 | 282 |
| | Rear 0.8 | Rear 22.5 | Rear 0.06 | Rear 17.5 | Rear 5 | - | 0.5 | | |

### <Configuration>

### [Experimental Example 1-1]

As shown in FIG. 4, a catalytic layer of Experimental Example 1-1 has a two-layer structure of the first catalytic layer 6 and the third catalytic layer 8 provided over the entire length of the support 2.

### [Experimental Example 1-2]

A catalytic layer of Experimental Example 1-2 has a two-layer structure of the first catalytic layer 6 and the third catalytic layer 8. The first catalytic layer 6 has a front portion 61 with a length of 50% of the support 2 from the front end and a rear portion 62 with a length of 50% of the support 2 from the rear end. The third catalytic layer 8 also has a front portion 81 with a length of 50% of the support 2 from the front end and a rear portion 82 with a length of 50% of the support 2 from the rear end. In Tables 1 and 2, "Front" is added in front of the values of the front portions 61, 81, and "Rear" is added in front of the values of the rear portions 62, 82.

### [Experimental Example 1-3]

A catalytic layer of Experimental Example 1-3 has a three-layer structure including the first catalytic layer 6, the second catalytic layer 7, and the third catalytic layer 8 each provided over the entire length of the support 2.

### [Experimental Example 1-4]

A catalytic layer of Experimental Example 1-4 has a three-layer structure including the first catalytic layer 6, the second catalytic layer 7, and the third catalytic layer 8. The third catalytic layer 8 has a front portion 81 with a length of 50% of the support 2 from the front end and a rear portion 82 with a length of 50% of the support 2 from the rear end. In Table 2, "Front" is added in front of the values of the front portion 81, and "Rear" is added in front of the values of the rear portion 82. The catalytic layer of this example corresponds to the catalytic layer 3 of the present disclosure that satisfies L1 = L2 = LT shown in FIG. 2.

### <Materials>

The compositions of the support and the catalyst materials used in the catalytic layers are as follows.

### [Support]

A 1 L-capacity honeycomb ceramic support having a cell wall thickness of 3.5 mil (8.89 × 10⁻² mm), 600 cells per square inch (645.16 mm²), a diameter of 118.4 mm, a length of 91 mm was used.

### [First Catalytic Layer and Second Catalytic Layer]

### • Rh/ZrCeNd: Rh-supporting ZrCeNd composite oxide

The Rh-supporting ZrCeNd composite oxide is a catalyst powder (mean particle diameter D50: 3 µm) having Rh supported by evaporation and drying method on a ZrCeNd composite oxide used as a support material (prepared by co-precipitation method described above). The ZrCeNd composite oxide has a composition ratio of ZrO₂:CeO₂:Nd₂O₃ = 80:10:10 (mass ratio).

### • Rh/ZrLaY: Rh-supporting ZrLaY composite oxide

The Rh-supporting ZrLaY composite oxide is a catalyst powder (mean particle diameter D50: 3 µm) having Rh supported by evaporation and drying method on a ZrLaY composite oxide used as a support material prepared by co-precipitation method described above. The ZrLaY composite oxide has a composition ratio of ZrO₂:LaO₂:Y₂O₃ = 84:6:10 (mass ratio).
- BaSO₄: barium sulfate (commercially available product)
- Binder: zirconia binder (commercially available product, total amount of the first and second catalytic layers supported is 12.2 g/support)
- Amount of Rh supported (first catalytic layer + second catalytic layer): 1.0 g/support

### [Third Catalytic Layer]

### • Pd/Al₂O₃: Pd-supporting activated alumina

The Pd-supporting activated alumina is a catalyst powder (mean particle diameter D50: 25 µm) having Pd supported on commercially available activated alumina. The activated alumina is La-stabilized alumina.

### • Pd/ZrCeNd: Pd-supporting ZrCeNd composite oxide

The Pd-supporting ZrCeNd composite oxide is a catalyst powder (mean particle diameter D50: 3 µm) having Pd supported by evaporation and drying method on a ZrCeNd composite oxide used as a support material. The ZrCeNd composite oxide has a composition ratio of ZrO₂:CeO₂:Nd₂O₃ = 55:35:10 (mass ratio).

### • ZrCeNd: ZrCeNd composite oxide

The ZrCeNd composite oxide is a powder of a ZrCeNd composite oxide (mean particle diameter D50: 3 µm) containing no noble metal. The ZrCeNd composite oxide has a composition ratio of ZrO₂:CeO₂:Nd₂O₃ = 55:35:10 (mass ratio).
- Binder: zirconia binder (supported in an amount of 13.5 g/support)
- Amount of Pd supported (third catalytic layer): 2.2 g/support

### [Method for Preparing Catalyst Sample]

### • Experimental Example 1-1

The catalyst materials of the third catalytic layer, the binder, and the ion-exchange water were mixed to form slurry, and the slurry was applied to coat the entire length of the honeycomb support. After drying, the product was fired in the air at 450°C for two hours to form a third catalytic layer.

Then, the catalyst materials of the first catalytic layer, the binder, and ion-exchange water were mixed to form slurry, and the slurry was applied to coat the entire length of the support provided with the third catalytic layer. After drying, the product was fired in the air at 450°C for two hours to form a first catalytic layer.

### • Experimental Example 1-2

Slurries for the front portion and rear portion of the third catalytic layer were prepared by mixing the catalyst materials, the binder, and ion-exchange water. The slurry for the front portion was poured onto the support from the upstream end to coat a portion with a length of 50% of the support from the front end. The slurry for the rear portion was poured onto the support from the downstream end to coat a portion with a length of 50% of the support from the rear end. After drying, the product was fired in the air at 450°C for two hours to form a third catalytic layer.

Then, slurries for the front portion and rear portion of the first catalytic layer were prepared by mixing the catalyst materials, the binder, and ion-exchange water. The slurry for the front portion was poured onto the support from the upstream end to coat a portion with a length of 50% of the support from the front end. The slurry for the rear portion was poured onto the support from the downstream end to coat a portion with a length of 50% of the support from the rear end. After drying, the product was fired in the air at 450°C for two hours to form a first catalytic layer.

### • Experimental Example 1-3

The catalyst materials of the third catalytic layer, the binder, and the ion-exchange water were mixed to form slurry, and the slurry was applied to coat the entire length of the honeycomb support. After drying, the product was fired in the air at 450°C for two hours to form a third catalytic layer.

Then, the catalyst materials of the second catalytic layer, the binder, and ion-exchange water were mixed to form slurry, and the slurry was applied to coat the entire length of the support provided with the third catalytic layer. After drying, the product was fired in the air at 450°C for two hours to form a second catalytic layer.

Then, the catalyst materials of the first catalytic layer, the binder, and ion-exchange water were mixed to form slurry, and the slurry was applied to coat the entire length of the support provided with the third catalytic layer and the second catalytic layer. After drying, the product was fired in the air at 450°C for two hours to form a first catalytic layer.

### • Experimental Example 1-4

Slurries for the front portion and rear portion of the third catalytic layer were prepared by mixing the catalyst materials, the binder, and ion-exchange water. The slurry for the front portion was poured onto the support from the upstream end to coat a portion with a length of 50% of the support from the front end. The slurry for the rear portion was poured onto the support from the downstream end to coat a portion with a length of 50% of the support from the rear end. After drying, the product was fired in the air at 450°C for two hours to form a third catalytic layer.

Then, the catalyst materials of the second catalytic layer, the binder, and ion-exchange water were mixed to form slurry, and the slurry was applied to coat the entire length of the support provided with the third catalytic layer. After drying, the product was fired in the air at 450°C for two hours to form a second catalytic layer.

Then, the catalyst materials of the first catalytic layer, the binder, and ion-exchange water were mixed to form slurry, and the slurry was applied to coat the entire length of the support provided with the third catalytic layer and the second catalytic layer. After drying, the product was fired in the air at 450°C for two hours to form a first catalytic layer.

### <Evaluation of Exhaust Gas Purification Performance>

### [Evaluation Method]

The catalysts of Experimental Examples 1-1 to 1-4 were bench-aged in the following manner, and their purification performance for HC was examined using a simulated exhaust gas.

### • Bench aging

A bench aging sample with a diameter of 43 mm, a length of 75 mm, and a volume of 110 ml was cut out from the center in the length direction and radial direction of each catalyst sample. With an engine bench system, each bench aging sample was aged by repeating an engine operation mode that starts from one-minute idling (A/F (air fuel ratio) = 14.7), followed by one-minute acceleration (at an engine speed of 3,560 rpm, A/F = 13.5), two-minute steady state operation (at an engine speed of 3,300 rpm, A/F = 14.7), and fuel cut-off operation (A/F > 20), and returns to the one-minute idling. The catalyst temperature was 900°C, and the aging was performed for 100 hours. During the aging, an engine oil was supplied to the engine from an intake manifold at a flow rate of 30 mL/h.

### • Measurement of HC Purification Rate

A core sample with a diameter of 38.1 mm, a length of 30 mm, and a volume of 34 mL was cut out from the center in the length direction and radial direction of each of bench aging samples after bench aging. The core sample was attached to a gas flow reactor, the temperature of the simulated exhaust gas flowing into the catalyst was gradually raised from 100°C, and the concentration of HC in the gas flowing out of the catalyst was detected to determine the HC purification rate.

The simulated exhaust gas had the A/F ratio = 14.7 ± 0.9 (1.0 Hz), and contained 10.0% of H₂O, 1,600 ppmC of C₃H₆ (HC), 1,000 ppm of NO, 0.56% of CO, 13.9% of CO₂, 0.56% of O₂, 1,800 ppm of H₂, and N₂ as the remainder. The simulated exhaust gas had a flow rate of 34.2 L/min (space velocity SV = about 60,000 h⁻¹), a temperature of 100°C to 450°C, and a temperature rise rate of 25°C/min.

### [Measurement Results]

Table 2 shows the gas temperature T50 (HC) at the inlet of the catalyst when the HC purification rate reached 50%.

As shown in Table 2, it is found that the catalyst sample of Experimental Example 1-4 corresponding to an example of the catalytic layer of the present disclosure reduced T50 of HC and improved the HC purification performance as compared with the catalyst samples of Experimental Examples 1-1 to 1-3.

Specifically, the catalyst samples of Experimental Examples 1-1 to 1-3 showed T50 (HC) higher than 283°C, whereas the catalyst sample of Experimental Example 1-4 reduced T50 (HC) to 283°C or lower, improving the HC purification performance.

### (Experiment 2)

Catalysts of Experimental Examples 2-1 to 2-17 and Experimental Examples 2-11b to 2-11f were evaluated for the purification performance for HC, CO, and NOx by CAE analysis. Catalyst samples of Experimental Examples 2-6, 2-10, 2-11, and 2-14 to 2-17 were actually prepared, and their purification performance was evaluated.

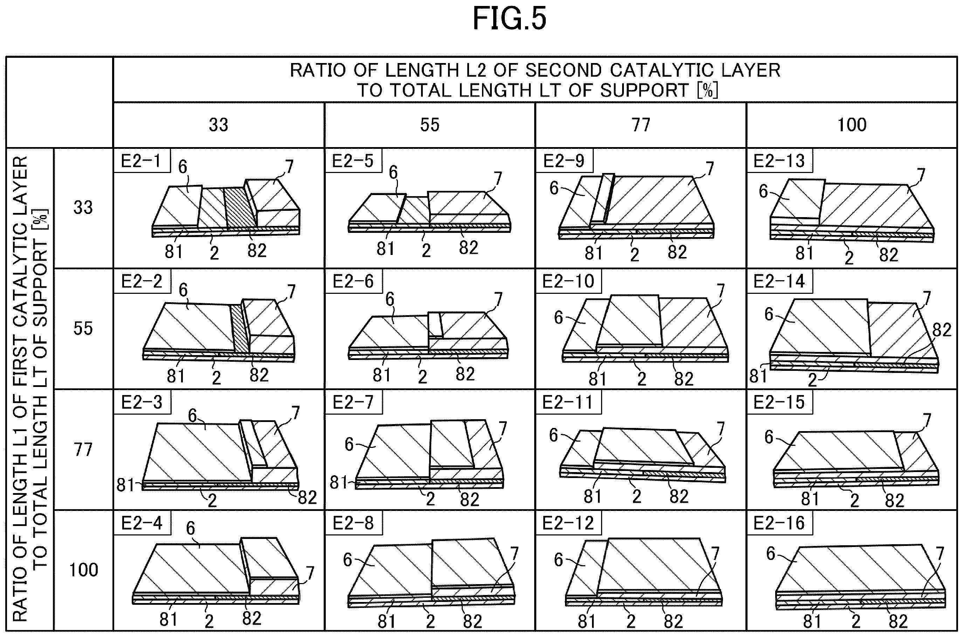

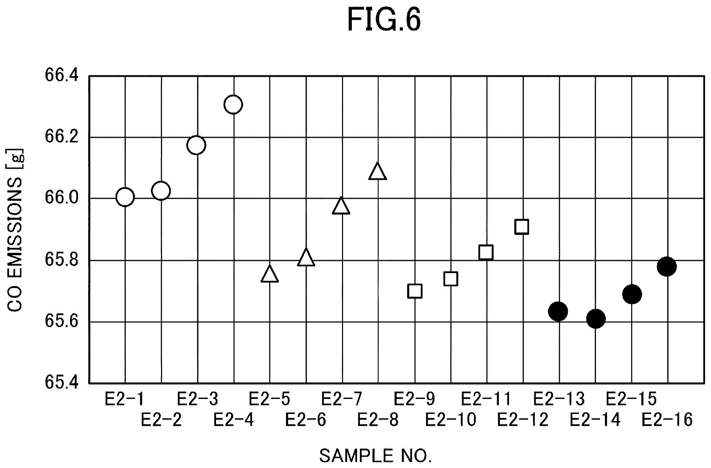

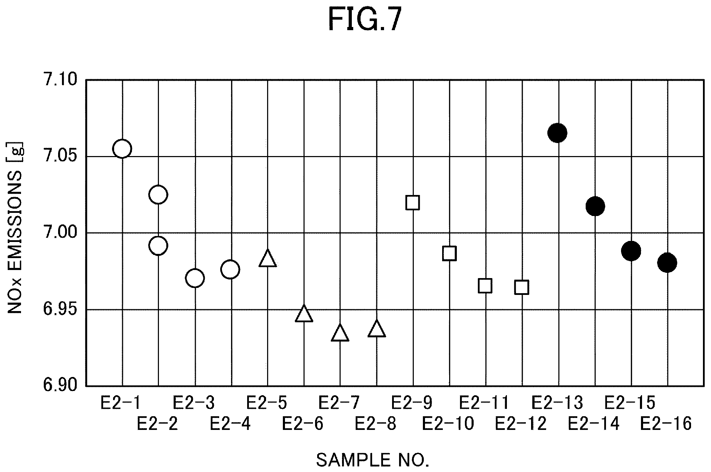

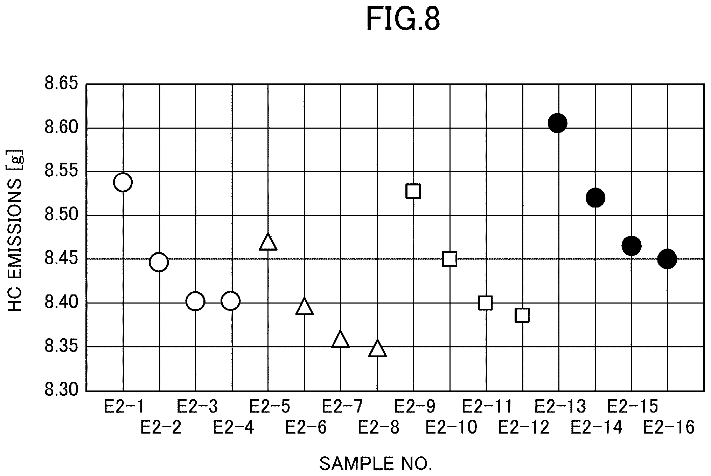

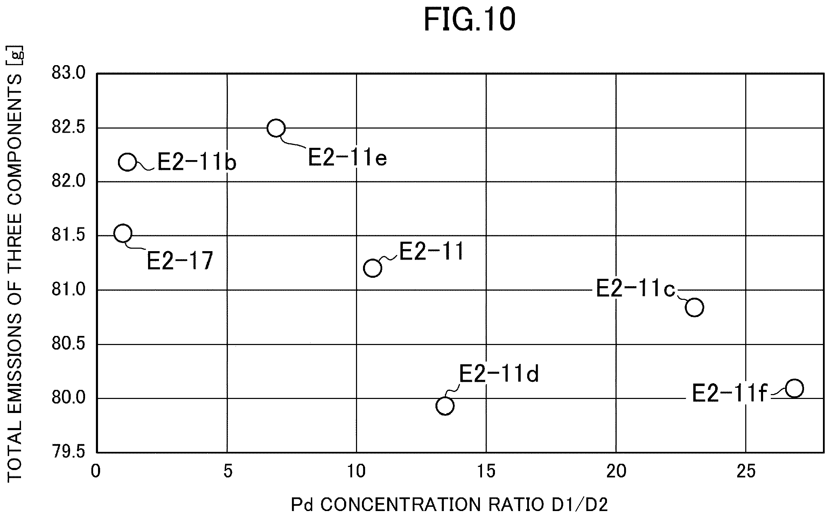

FIG. 5 and Table 3 show details of the first catalytic layer, the second catalytic layer, and the third catalytic layer of each catalyst. FIGS. 6 to 10 show the evaluation results.

**[Table 3]**

| Experimental Examples | Reference Numeral | First Catalytic Layer | | | Second Catalytic Layer | | | Rh Concentration Ratio C1/C2 | Front Portion of Third Catalytic Layer | | | Rear Portion of Third Catalytic Layer | | | Pd Concentration ratio D1/D2 | Total Emissions of Three Components (g) | Results of Rig Test (after Bench Aging at 900°C) |
|---|---|---|---|---|---|---|---|---|---|---|---|---|---|---|---|---|---|
| | | Amount of Rh Supported (g/support) | Amount of First Catalyst Material Supported (g/support) | Rh Concentration C1 (mass%) | Amount of Rh Supported (g/support) | Amount of Second Catalyst Material Supported (g/support) | Rh Concentration C2 (mass%) | | Amount of Pd Supported (g/support) | Amount of Upstream Catalyst Material Supported (g/support) | Pd Concentration D1 (mass%) | Amount of Pd Supported (g/support) | Amount of Downstream Catalyst Material Supported (g/support) | Pd Concentration D2 (mass%) | | | T50 (HC) (°C) |
| 2-1 | E2-1 | 0.210 | 57 | 0.37 | 0.265 | 105 | 0.25 | 1.5 | 2 | 42 | 4.76 | 0.187 | 42 | 0.45 | 10.7 | 81.6 | |
| 2-2 | E2-2 | 0.210 | 57 | 0.37 | 0.265 | 105 | 0.25 | 1.5 | 2 | 42 | 4.76 | 0.187 | 42 | 0.45 | 10.7 | 81.5 | - |
| 2-3 | E2-3 | 0.210 | 57 | 0.37 | 0.265 | 105 | 0.25 | 1.5 | 2 | 42 | 4.76 | 0.187 | 42 | 0.45 | 10.7 | 81.5 | - |
| 2-4 | E2-4 | 0.210 | 57 | 0.37 | 0.265 | 105 | 0.25 | 1.5 | 2 | 42 | 4.76 | 0.187 | 42 | 0.45 | 10.7 | 81.7 | - |
| 2-5 | E2-5 | 0.210 | 57 | 0.37 | 0.265 | 105 | 0.25 | 1.5 | 2 | 42 | 4.76 | 0.187 | 42 | 0.45 | 10.7 | 81.2 | - |
| 2-6 | E2-6 | 0.210 | 57 | 0.37 | 0.265 | 105 | 0.25 | 1.5 | 2 | 42 | 4.76 | 0.187 | 42 | 0.45 | 10.7 | 81.2 | 209 |
| 2-7 | E2-7 | 0.210 | 57 | 0.37 | 0.265 | 105 | 0.25 | 1.5 | 2 | 42 | 4.76 | 0.187 | 42 | 0.45 | 10.7 | 81.3 | - |
| 2-8 | E2-8 | 0.210 | 57 | 0.37 | 0.265 | 105 | 0.25 | 1.5 | 2 | 42 | 4.76 | 0.187 | 42 | 0.45 | 10.7 | 81.4 | - |
| 2-9 | E2-9 | 0.210 | 57 | 0.37 | 0.265 | 105 | 0.25 | 1.5 | 2 | 42 | 4.76 | 0.187 | 42 | 0.45 | 10.7 | 81.3 | - |
| 2-10 | E2-10 | 0.210 | 57 | 0.37 | 0.265 | 105 | 0.25 | 1.5 | 2 | 42 | 4.76 | 0.187 | 42 | 0.45 | 10.7 | 81.2 | 208 |
| 2-11 | E2-11 | 0.210 | 57 | 0.37 | 0.265 | 105 | 0.25 | 1.5 | 2 | 42 | 4.76 | 0.187 | 42 | 0.45 | 10.7 | 81.2 | 209 |
| 2-12 | E2-12 | 0.210 | 57 | 0.37 | 0.265 | 105 | 0.25 | 1.5 | 2 | 42 | 4.76 | 0.187 | 42 | 0.45 | 10.7 | 81.3 | - |
| 2-13 | E2-13 | 0.210 | 57 | 0.37 | 0.265 | 105 | 0.25 | 1.5 | 2 | 42 | 4.76 | 0.187 | 42 | 0.45 | 10.7 | 81.3 | - |
| 2-14 | E2-14 | 0.210 | 57 | 0.37 | 0.265 | 105 | 0.25 | 1.5 | 2 | 42 | 4.76 | 0.187 | 42 | 0.45 | 10.7 | 81.2 | 210 |
| 2-15 | E2-15 | 0.210 | 57 | 0.37 | 0.265 | 105 | 0.25 | 1.5 | 2 | 42 | 4.76 | 0.187 | 42 | 0.45 | 10.7 | 81.1 | 212 |
| 2-16 | E2-16 | 0.210 | 57 | 0.37 | 0.265 | 105 | 0.25 | 1.5 | 2 | 42 | 4.76 | 0.187 | 42 | 0.45 | 10.7 | 81.2 | 212 |
| 2-17 | E2-17 | 0.210 | 57 | 0.37 | 0.265 | 105 | 0.25 | 1.5 | Uniform Coating (amount of Pd supported: 2.187 g, amount of catalyst material supported: 82.187 g, D1 = D2 = 2.66 mass%) | | | | | | 1.0 | 81.5 | 213 |
| 2-11b | E2-11b | 0.210 | 57 | 0.37 | 0.265 | 105 | 0.25 | 1.5 | 1.19 | 41.19 | 2.88 | 1 | 41 | 2.44 | 1.2 | 82.2 | - |
| 2-11c | E2-11c | 0.210 | 57 | 0.37 | 0.265 | 105 | 0.25 | 1.5 | 2.1 | 42.1 | 4.99 | 0.087 | 40.087 | 0.22 | 23.0 | 80.8 | |
| 2-11d | E2-11d | 0.210 | 57 | 0.37 | 0.265 | 105 | 0.25 | 1.5 | 2 | 32 | 6.25 | 0.187 | 40.187 | 0.47 | 13.4 | 79.9 | - |
| 2-11e | E2-11e | 0.210 | 57 | 0.37 | 0.265 | 105 | 0.25 | 1.5 | 2 | 62 | 3.23 | 0.187 | 40.187 | 0.47 | 6.9 | 82.5 | - |
| 2-11f | E2-11f | 0.210 | 57 | 0.37 | 0.265 | 105 | 0.25 | 1.5 | 2 | 32 | 6.25 | 0.187 | 80.187 | 0.23 | 26.8 | 80.1 | - |

### <Materials>

### [Support]

A 1 L-capacity honeycomb ceramic support having a cell wall thickness of 3.5 mil (8.89 × 10⁻²mm), 600 cells per square inch (645.16 mm²), a diameter of 118.4 mm, and a length of 91 mm was used.

### [First Catalytic Layer]

Rh/ZrLaY (Rh-supporting ZrLaY composite oxide) used in Experiment 1 was used as the catalyst material contained in the first catalytic layer. The Rh concentration was 3.67 mass%. The first catalytic layer contained BaSO₄ and a zirconia binder, the amount of Ba supported was 10 g/support, and the amount of binder supported was 12.2 g/support.

### [Second Catalytic Layer]

Rh/ZrCeNd (Rh-supporting ZrCeNd composite oxide) and Rh/ZrLaY (Rh-supporting ZrLaY composite oxide) used in Experiment 1 were used as the catalyst materials contained in the second catalytic layer. Rh/ZrCeNd had a Rh concentration of 0.276 mass% and supported 90.249 g/support of Rh. Rh/ZrLaY had a Rh concentration of 0.107 mass% and supported 15.016 g/support of Rh. The second catalytic layer contained a zirconia binder, and the amount of the binder supported was 12.2 g/support.

### [Third Catalytic Layer]

Pd/Al₂O₃ (Pd-supporting activated alumina) and Pd/ZrCeNd (Pd-supporting ZrCeNd composite oxide) used in Experiment 1 were used as the catalyst materials contained in the third catalytic layer. In each of Experimental Examples 2-1 to 2-16, Pd/Al₂O₃ in the front portion had a Pd concentration of 7.7 mass% and supported 24.38 g/support of Pd, and Pd/ZrCeNd in the front portion had a Pd concentration of 0.68 mass% and supported 17.62 g/support of Pd. Pd/Al₂O₃ in the rear portion had a Pd concentration of 0.78 mass% and supported 22.676 g/support of Pd, and Pd/ZrCeNd in the rear portion had a Pd concentration of 0.063 mass% and supported 17.511 g/support of Pd. In Experimental Example 2-17, Pd/Al₂O₃ had a Pd concentration of 4.4 mass% and supported 47.056 g/support of Pd, and Pd/ZrCeNd had a Pd concentration of 0.37 mass% and supported 35.131 g/support of Pd. In Experimental Examples 2-11b to 2-11f, the Pd concentrations in Pd/Al₂O₃ and Pd/ZrCeNd were the same as those of Experimental Example 2-11, and the mixing ratios of Pd/Al₂O₃ and Pd/ZrCeNd were adjusted to reach the Pd concentrations D1 and D2 shown in Table 3.

The third catalytic layer contained ZrCeNd and a zirconia binder as in Experimental Example 1-4, supported 20 g/support of ZrCeNd (10 g/support in the front portion and 10 g/support in the rear portion), and supported 14 g/support of the binder (7 g/support in the front portion and 7 g/support in the rear portion).

### <Analysis Conditions>

The analysis was conducted under the following conditions.
- CAE analysis software: Axisuite 1D model (manufactured by Exothermia S.A.)
- Model: One side of one cell of a support was modeled
- First catalytic layer and second catalytic layer: those supporting 0.475 g of Rh in total were modeled In all the experimental examples of Experiment 2, the first catalytic layer and the second catalytic layer supported the same amount of Rh and the same amounts of catalyst materials, and the lengths L1 and L2 of the first catalytic layer 6 and the second catalytic layer 7 were variable as shown in FIGS. 2 and 5.
- Third catalytic layer: one supporting 2.2 g of Pd in total was modeled. In all the experimental examples of Experiment 2, the lengths of the front portion and the rear portion were fixed to 50% of LT.
- Gas: flowed for 0 seconds to 720 seconds, contained 10% of H₂O, 1,600 ppmC of C₃H₆ (HC), 1,000 ppm of NO (NOx), 0.56% of CO, 13.9% of CO₂, 0.56% of O₂, 1,800 ppm of H₂, N₂ as the remainder The gas space velocity SV was about 60,000 h⁻¹, the gas temperature was 100°C to 450°C, and the temperature rise rate was 30°C/min.

### <Results>

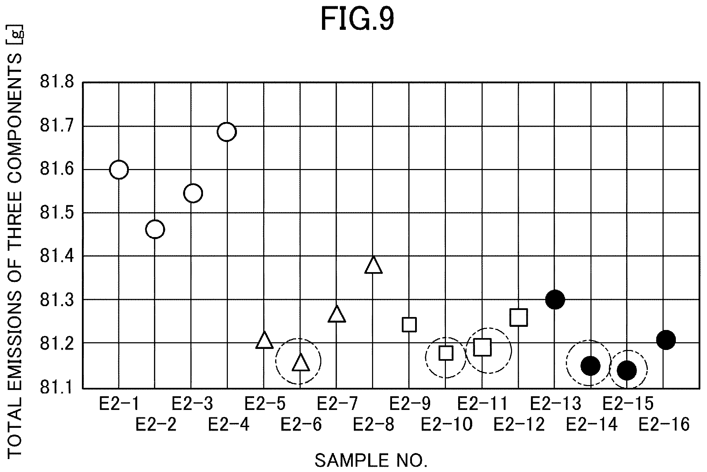

FIGS. 6 to 8 show the emissions of HC, CO, and NOx of the catalyst models of Experimental Examples 2-1 to 2-16. Table 3 and FIG. 9 show the total emissions of the three components by adding up the emissions of the three components shown in FIGS. 6 to 8.

As shown in Table 3 and FIG. 9, the catalyst models of Experimental Examples 2-5 to 2-16 had the total emissions of the three components of 81.4 g or less, improving the purification performance for the three components as compared with Experimental Examples 2-1 to 2-4 and Experimental Example 2-17 in which the third catalytic layer was a uniform coating. In particular, the catalyst models of Experimental Examples 2-6, 2-10, 2-11, 2-14, and 2-15 each circled with a dash-dot line in the graph of FIG. 9 had the total emissions of the three components of 81.2 g or less, indicating that the purification performance for the three components was excellent. Although the total emission of the three components of the catalyst model of Experimental Example 2-5 was relatively small, the catalytic layer of this model had no overlapping portion between the first and second catalytic layers, exposing part of the third catalytic layer as illustrated in FIG. 5. This may easily accelerate the thermal degradation of Pd contained in the third catalytic layer and the P poisoning.

### <Evaluation of Exhaust Gas Purification Performance>

### [Evaluation Method]

The catalyst samples of Experimental Examples 2-6, 2-10, 2-11, and 2-14 to 2-17 were evaluated for purification performance for HC using the simulated exhaust gas by the same evaluation method as in Experiment 1.

### [Measurement Results]

Table 3 shows the gas temperature T50 (HC) at the inlet of the catalyst when the HC purification rate reached 50%.

As shown in Table 3, it is found that the catalyst samples of Experimental Examples 2-6, 2-10, 2-11, and 2-14 to 2-16 corresponding to examples of the catalytic layer of the present disclosure reduced T50 of HC and improved the HC purification performance as compared with the catalyst sample of Experimental Examples 2-17 (uniform coating).

Specifically, the catalyst sample of Experimental Example 2-17 showed T50 (HC) of 213°C, whereas the catalytic samples of Experimental Examples 2-6, 2-10, 2-11, and 2-14 to 2-16 showed T50 (HC) of 212°C or lower. In particular, the catalyst samples of Experimental Examples 2-6, 2-10, and 2-11 reduced T50 (HC) to 210°C or lower, improving the HC purification performance.

The present disclosure provides an exhaust gas purification catalyst that effectively suppresses P poisoning and achieves both improved purification performance and reduced cost, and thus is extremely useful.

### DESCRIPTION OF REFERENCE CHARACTERS

- 1: Exhaust Gas Purification Catalyst
- 2: Support
- 2A: Upstream End (of Support)
- 2B: Downstream End (of Support)
- 3: Catalytic Layer
- 31: Overlapping Portion
- 6: First Catalytic Layer
- 7: Second Catalytic Layer
- 8: Third Catalytic Layer
- 81: Front Portion (of Third Catalytic Layer)
- 82: Rear Portion (of Third Catalytic Layer)
- LT: Total Length of Support
- L1: Length of First Catalytic Layer
- L2: Length of Second Catalytic Layer
- L31: Length of Overlapping Portion
- L81: Length of Front Portion (of Third Catalytic Layer)
- L82: Length of Rear Portion (of Third Catalytic Layer)
- P1: First Position
- P2: Second Position
- P3: Third Position

## Claims

1. An exhaust gas purification catalyst that is arranged in an exhaust passage of an engine and purifies P-containing exhaust gas of the engine, the exhaust gas purification catalyst comprising:
a support (2) having an upstream end and a downstream end; and
a catalytic layer formed on the support to purify the exhaust gas,
the catalytic layer including:
a first catalytic layer (6) that is formed from the upstream end to a first position on an outermost surface of the catalytic layer;
a second catalytic layer (7) that is formed from the downstream end to a second position upstream of the first position and has an overlapping portion (31) that overlaps with the first catalytic layer and is arranged closer to the support than the first catalytic layer; and
a third catalytic layer (8) arranged closer to the support than the first catalytic layer (6) and the second catalytic layer (7),
the first catalytic layer (6) containing a first catalyst material including Rh supported on a Ce-free support material and Ba, but containing no Ce,
the second catalytic layer (7) containing a second catalyst material including Rh supported on a support material containing a Ce-based oxygen storage/release material,
a ratio C2/C1 being more than 1.0, where C1 represents a Rh concentration in the first catalyst material, and C2 represents a Rh concentration in the second catalyst material,
the third catalytic layer (8) including:
a front portion (81) that is formed from the upstream end to a third position and contains an upstream catalyst material including Pd supported on an upstream support material; and
a rear portion (82) that is formed from the third position to the downstream end and contains a downstream catalyst material including Pd supported on a downstream support material,
a ratio D1/D2 being more than 1.0, where D1 represents a Pd concentration in the upstream catalyst material, and D2 represents a Pd concentration in the downstream catalyst material.

2. The exhaust gas purification catalyst of claim 1, wherein
a length from the upstream end to the first position is from 55% to 100%, inclusive, of a total length of the support.

3. The exhaust gas purification catalyst of claim 1 or 2, wherein
a length from the downstream end to the second position is from 55% to 100%, inclusive, of a total length of the support.

4. The exhaust gas purification catalyst of any one of claims 1 to 3, wherein
a length of the overlapping portion is from 8% to 90%, inclusive, of the total length of the support.

5. The exhaust gas purification catalyst of any one of claims 1 to 4, wherein
the ratio D1/D2 is 2.0 or more.

6. The exhaust gas purification catalyst of any one of claims 1 to 5, wherein
the ratio C1/C2 is from 1.2 to 5.0 inclusive.

7. The exhaust gas purification catalyst of any one of claims 1 to 6, wherein
an amount of Ba supported in the first catalytic layer is from 5 g/support to 20 g/support inclusive.

8. The exhaust gas purification catalyst of any one of claims 1 to 7, wherein
at least one of the upstream support material or the downstream support material is at least one selected from the group consisting of activated alumina, a Ce-containing Zr-based composite oxide, and a Ce-free Zr-based composite oxide.

9. The exhaust gas purification catalyst of any one of claims 1 to 8, wherein
the Ce-based oxygen storage/release material is a Ce-containing Zr-based composite oxide.

10. The exhaust gas purification catalyst of any one of claims 1 to 9, wherein
the Ce-free support material is a Ce-free Zr-based composite oxide.

## Patentansprüche

1. Abgasreinigungskatalysator, der in einem Abgasdurchgang eines Motors angeordnet ist und P-haltiges Abgas des Motors reinigt, wobei der Abgasreinigungskatalysator umfasst:
einen Träger (2) mit einem stromaufwärtigen Ende und einem stromabwärtigen Ende; und
eine auf dem Träger ausgebildete Katalysatorschicht zur Reinigung des Abgases,
wobei die Katalysatorschicht umfasst:
eine erste Katalysatorschicht (6), die sich von dem stromaufwärtigen Ende bis zu einer ersten Position auf der äußersten Oberfläche der Katalysatorschicht erstreckt;
eine zweite Katalysatorschicht (7), die sich von dem stromabwärtigen Ende bis zu einer zweiten Position stromaufwärts der ersten Position erstreckt und einen Überlappungsbereich (31) aufweist, der sich mit der ersten Katalysatorschicht überlappt und näher am Träger angeordnet ist als die erste Katalysatorschicht; und
eine dritte Katalysatorschicht (8), die näher am Träger angeordnet ist als die erste Katalysatorschicht (6) und die zweite Katalysatorschicht (7),
wobei die erste Katalysatorschicht (6) ein erstes Katalysatormaterial enthält, das Rh getragen auf einem Ce-freien Trägermaterial und Ba einschließt jedoch kein Ce enthält,
wobei die zweite Katalysatorschicht (7) ein zweites Katalysatormaterial enthält, das Rh getragen auf einem Trägermaterial, das ein Ce-basiertes Sauerstoffspeicher-/Sauerstofffreisetzungsmaterial enthält, einschließt,
wobei das Verhältnis C2/C1 größer als 1,0 ist, wobei C1 die Rh-Konzentration im ersten Katalysatormaterial und C2 die Rh-Konzentration im zweiten Katalysatormaterial bezeichnet, wobei die dritte Katalysatorschicht (8) umfasst:
einen vorderen Abschnitt (81), der sich von dem stromaufwärtigen Ende bis zu einer dritten Position erstreckt und ein stromaufwärtiges Katalysatormaterial enthält, das Pd umfasst, welches auf einem stromaufwärtigen Trägermaterial getragen ist; und
einen hinteren Abschnitt (82), der sich von der dritten Position bis zu dem stromabwärtigen Ende erstreckt und ein stromabwärtiges Katalysatormaterial enthält, das Pd umfasst, welches auf einem stromabwärtigen Trägermaterial getragen ist,
wobei das Verhältnis D1/D2 größer als 1,0 ist, wobei D1 die Pd-Konzentration in dem stromaufwärtigen Katalysatormaterial und D2 die Pd-Konzentration in dem stromabwärtigen Katalysatormaterial bezeichnet.

2. Abgasreinigungskatalysator nach Anspruch 1,
wobei die Länge von dem stromaufwärtigen Ende bis zu der ersten Position 55 % bis 100 %, einschließlich, der Gesamtlänge des Trägers beträgt.

3. Abgasreinigungskatalysator nach Anspruch 1 oder 2,
wobei die Länge vom stromabwärtigen Ende bis zur zweiten Position 55 % bis 100 %, einschließlich, einer Gesamtlänge des Trägers beträgt.

4. Abgasreinigungskatalysator nach einem der Ansprüche 1 bis 3,
wobei die Länge des Überlappungsbereichs 8 % bis 90 %, einschließlich, der Gesamtlänge des Trägers beträgt.

5. Abgasreinigungskatalysator nach einem der Ansprüche 1 bis 4,
wobei das Verhältnis D1/D2 mindestens 2,0 beträgt.

6. Abgasreinigungskatalysator nach einem der Ansprüche 1 bis 5,
wobei das Verhältnis C1/C2 1,2 bis 5,0 einschließlich beträgt.

7. Abgasreinigungskatalysator nach einem der Ansprüche 1 bis 6,
wobei die in der ersten Katalysatorschicht getragene Ba-Menge 5 g/Träger bis 20 g/Träger einschließlich beträgt.

8. Abgasreinigungskatalysator nach einem der Ansprüche 1 bis 7,
wobei mindestens eines des stromaufwärtigen Trägermaterials oder des stromabwärtigen Trägermaterials mindestens eines ist, ausgewählt aus der Gruppe, bestehend aus aktiviertem Aluminiumoxid, einem Ce-haltigen Zr-basierten Mischoxid und einem Ce-freien Zr-basierten Mischoxid.

9. Abgasreinigungskatalysator nach einem der Ansprüche 1 bis 8,
wobei das Ce-basierte Sauerstoffspeicher-/Sauerstofffreisetzungsmaterial ein Ce-haltiges Zr-basiertes Mischoxid ist.

10. Abgasreinigungskatalysator nach einem der Ansprüche 1 bis 9,
wobei das Ce-freie Trägermaterial ein Ce-freies Zr-basiertes Mischoxid ist.

## Revendications

1. Catalyseur de purification de gaz d'échappement qui est agencé dans un passage d'échappement d'un moteur et purifie du gaz d'échappement contenant du P du moteur, le catalyseur de purification de gaz d'échappement comprenant :
un support (2) ayant une extrémité amont et une extrémité aval ; et
une couche catalytique formée sur le support pour purifier le gaz d'échappement,
la couche catalytique incluant :
une première couche catalytique (6) qui est formée de l'extrémité amont à une première position sur une surface externe de la couche catalytique ;
une deuxième couche catalytique (7) qui est formée de l'extrémité aval à une deuxième position en amont de la première position, et a une portion chevauchante (31) qui chevauche la première couche catalytique et est agencée plus près du support que la première couche catalytique ; et
une troisième couche catalytique (8) agencée plus près du support que la première couche catalytique (6) et la deuxième couche catalytique (7),
la première couche catalytique (6) contenant un premier matériau de catalyseur incluant du Rh supporté sur un matériau de support exempt de Ce et du Ba, mais ne contenant aucun Ce,
la deuxième couche catalytique (7) contenant un second matériau de catalyseur incluant du Rh supporté sur un matériau de support contenant un matériau de stockage/libération d'oxygène à base de Ce,
un rapport C2/C1 étant supérieur à 1,0, où C1 représente une concentration en Rh dans le premier matériau de catalyseur et C2 représente une concentration en Rh dans le second matériau de catalyseur,
la troisième couche catalytique (8) incluant :
une portion avant (81) qui est formée de l'extrémité amont à une troisième position et contient un matériau de catalyseur amont incluant du Pd supporté sur un matériau de support amont ; et
une portion arrière (82) qui est formée de la troisième position à l'extrémité aval et contient un matériau de catalyseur aval incluant du Pd supporté sur un matériau de support aval,
un rapport D1/D2 étant supérieur à 1,0 où D1 représente une concentration en Pd dans le matériau de catalyseur amont et D2 représente une concentration en Pd dans le matériau de catalyseur aval.

2. Catalyseur de purification de gaz d'échappement selon la revendication 1, dans lequel
une longueur de l'extrémité amont à la première position va de 55 % à 100 %, inclus, d'une longueur totale du support.

3. Catalyseur de purification de gaz d'échappement selon la revendication 1 ou 2, dans lequel
une longueur de l'extrémité aval à la deuxième position va de 55 % à 100 %, inclus, d'une longueur totale du support.

4. Catalyseur de purification de gaz d'échappement selon l'une quelconque des revendications 1 à 3, dans lequel
une longueur de la portion chevauchante va de 8 % à 90 %, inclus, de la longueur totale du support.

5. Catalyseur de purification de gaz d'échappement selon l'une quelconque des revendications 1 à 4, dans lequel
le rapport D1/D2 est de 2,0 ou plus.

6. Catalyseur de purification de gaz d'échappement selon l'une quelconque des revendications 1 à 5, dans lequel
le rapport C1/C2 va de 1,2 à 5,0 inclus.

7. Catalyseur de purification de gaz d'échappement selon l'une quelconque des revendications 1 à 6, dans lequel
une quantité de Ba supporté dans la première couche catalytique va de 5 g/support à 20 g/support inclus.

8. Catalyseur de purification de gaz d'échappement selon l'une quelconque des revendications 1 à 7, dans lequel
au moins un du matériau de support amont ou du matériau de support aval est au moins un composé sélectionné parmi le groupe constitué de l'alumine activée, d'un oxyde composite à base de Zr contenant du Ce et d'un oxyde composite à base de Zr exempt de Ce.

9. Catalyseur de purification de gaz d'échappement selon l'une quelconque des revendications 1 à 8, dans lequel
le matériau de stockage/libération d'oxygène à base de Ce est un oxyde composite à base de Zr contenant du Ce.

10. Catalyseur de purification de gaz d'échappement selon l'une quelconque des revendications 1 à 9, dans lequel
le matériau de support exempt de Ce est un oxyde composite à base de Zr exempt de Ce.
